# EUROPÄISCHE PATENTSCHRIFT

(11) **EP 3 710 192 B1**
(45) Veröffentlichungstag und Bekanntmachung des Hinweises auf die Patenterteilung: **27.07.2022**
(21) Anmeldenummer: 18792916.1
(22) Anmeldetag: 19.10.2018
(51) Int. Cl.: B23F 23/12, B23F 5/16, B23F 19/06

(54) **VERFAHREN ZUR BEARBEITUNG EINER VERZAHNUNG UND VERZAHNUNGSMASCHINE**
METHOD FOR CUTTING A GEAR AND GEAR-CUTTING MACHINE
PROCÉDÉ POUR L'USINAGE D'UNE DENTURE ET TAILLEUSE DE DENTURE

(30) Priorität: 15.11.2017 DE 102017010598
(43) Veröffentlichungstag der Anmeldung: 23.09.2020
(73) Patentinhaber: Gleason-Pfauter Maschinenfabrik GmbH, 71636 Ludwigsburg (DE)
(72) Erfinder: KRESCHEL, Jürgen, 71282 Hemmingen (DE)
(74) Vertreter: Leinweber & Zimmermann
(86) Internationale Anmeldenummer: PCT/EP2018/078793
(87) Internationale Veröffentlichungsnummer: WO 2019/096542

(56) Entgegenhaltungen:
- EP-A1- 0 496 004
- EP-A1- 2 283 958
- DE-A1- 10 012 158
- FR-A1- 2 695 723
- JP-A- 2001 347 423
- US-A1- 2015 088 298

## Beschreibung

Die Erfindung betrifft ein Verfahren zur Bearbeitung einer Verzahnung eines in einer Aufspannung gehaltenen Werkstücks, bei dem ein um seine Drehachse rotierendes, Schneidkanten aufweisendes Verzahnungswerkzeug mit der insbesondere um ihre Drehachse rotierenden Verzahnung in insbesondere wälzenden spanabtragenden Bearbeitungseingriff gebracht wird, um in einem oder mehreren Bearbeitungsdurchgängen eine vorgegebene Zahnflankenendgeometrie zu erzeugen. Ein derartiges Verfahren gemäß dem Oberbegriff des Anspruchs 1 ist aus dem Dokument US 2015/0088298 A1 bekannt, das auch ein Computerprogrammprodukt mit einem Steuerprogramm gemäß dem Oberbegriff des Anspruchs 9 und eine Verzahnungsmaschine mit einer Steuereinrichtung gemäß dem Oberbegriff des Anspruchs 10 offenbart.

Derartige Verfahren sind bekannt, zu deren bekanntesten Vertretern zählen das Wälzfräsen, Wälzstoßen und Wälzschälen.

Die hergestellten Verzahnungen werden oftmals in Getrieben eingesetzt und für diesen Einsatz in den Getrieben vorab mit Messverfahren überprüft, beispielsweise auf Verzahnungsfehler, die später im Getriebe zu ungewollten Geräuschen oder anderweitigem Versagen führen können. Wenn beispielsweise eine für die beabsichtigte Tragfähigkeit der Verzahnungsflanken vorgesehenen Zahnflankenmodifikationen etwa in Form einer gewünschten Balligkeit nicht erreicht wird, kann aufgrund der Ergebnisse der Messverfahren beim Herstellungsverfahren nachjustiert werden oder ggf. einzelne Werkstücke aussortiert werden. Dennoch kommt es immer wieder vor, dass hergestellte Verzahnungen im späteren Einsatz im Getriebe nicht die gewünschten Eigenschaften aufzeigen.

US 2015/0088298 A1 offenbart ein Wälzschälverfahren mit einer Überwachung auf einerseits Werkzeugbruch und erreichte Endstandzeit des Werkzeugs sowie andererseits radiale und/oder azimutale Positions-Korrektur im Falle oberhalb einer Toleranzgrenze liegender Schwingungen des Werkzeug-Werkstücksystems bei der Bearbeitung nahe der auslaufenden Endseite des Werkstücks.

Der Erfindung liegt daher die Aufgabe zugrunde, ein Verfahren der eingangs genannten Art insbesondere im Hinblick auf einen späteren zuverlässigeren Einsatz der Verzahnungen zu verbessern.

Diese Aufgabe wird in verfahrenstechnischer Hinsicht durch eine Weiterbildung des Verfahrens der eingangs genannten Art gelöst, die im Wesentlichen dadurch gekennzeichnet ist, dass während des die Zahnflankenendgeometrie erzeugenden Bearbeitungsdurchgangs eine auf das Ereignis eines durch die insbesondere wälzende Bearbeitung bewirkten Einpressens eines bereits abgetragenen Spans in eine bearbeitete Zahnflanke der Verzahnung ansprechende Überwachung durchgeführt wird und bei Ansprechen der Überwachung insbesondere automatisch eine einen bei eingetretenem Ereignis durch den eingepressten Span gebildeten Materialüberstand über der Zahnflankenendgeometrie beseitigende zusätzliche Verzahnungsbearbeitung ausgeführt wird, die insbesondere in derselben Aufspannung des Werkstücks und insbesondere durch das Verzahnungswerkzeug selbst erfolgt.

Dabei beruht die Erfindung zunächst auf der Erkenntnis, dass die nicht zufriedenstellenden Eigenschaften darauf beruhen, dass in dem vorgesehenen letzten Bearbeitungsdurchgang ein umherfliegender Span in einen Spalt zwischen einer Fläche des Verzahnungswerkzeugs und der Verzahnung des Werkstücks gelangen kann und in Folge des Abwälzprozesses des Verzahnungswerkzeugs in die bereits bearbeitete Zahnflanke der Verzahnung eingepresst wird. Diese eingepressten Späne sind mechanisch nicht ohne Weiteres einfach lösbar, da aufgrund der üblicherweise bei der Bearbeitung auftretenden Temperaturen eine Art Kaltverschweißung oder Reibverschweißung mit dem Material des Werkstücks vorliegt.

Des Weiteren beruht die Erfindung auf der Erkenntnis, dass derartige Ereignisse oftmals im Fußbereich der Verzahnung auftreten und als Einzelfälle, so dass sie von den üblicherweise durchgeführten Überprüfungen und Messverfahren nicht zuverlässig genug erkannt werden, um eine ausreichend hohe Trefferquote beim Aussortieren nicht geeigneter Verzahnungen sicherstellen zu können.

Schließlich beruht die Erfindung noch auf der Erkenntnis, dass bereits während dieses Bearbeitungsdurchgangs und nicht erst durch eine spätere Überprüfung festgestellt werden kann, ob möglicherweise ein solches schädliches Ereignis eingetreten ist, sowie auf der Erkenntnis, dass bereits im Verdachtsfall reagiert werden kann und dies sogar unmittelbar vor Ort und auch bei Bedarf ohne zusätzliche Werkzeuge. Die zusätzliche Verzahnungsbearbeitung beseitigt somit die Störung durch den eingepressten Span, ohne die Zahnflankenendgeometrie selbst zu modifizieren.

Zwar nimmt man durch die Durchführung der zusätzlichen Verzahnungsbearbeitung einen Zeitverlust in Kauf, wie dadurch bedingt auch unterschiedliche Bearbeitungszeiten für gleiche Werkstücke einer Charge, so dass es zu einer Uneinheitlichkeit im Bearbeitungstakt kommt. Die Erfindung beruht jedoch weiter auf der Erkenntnis, dass dieser in Kauf genommene Zeitverlust durch die von der zusätzlichen Verzahnungsbearbeitung erreichten Wirkung und Verbesserung in der Zuverlässigkeit der Werkstücke überwogen werden.

In einer zweckmäßigen Verfahrensgestaltung spricht die Überwachung an, wenn die Amplitude des zeitlichen Verlaufs eines von ihr überwachten Parameters einen vorgegebenen Schwellenwert überschreitet. Die Einstellung des vorgegebenen Schwellenwerts erfolgt dabei so, dass ein Sicherheitsabstand zu einem Grundrauschen des zeitlichen Verlaufs des Parameters eingehalten wird, um die Gefahr eines Ansprechens trotz nicht eingetretenem Ereignis zu reduzieren. Zudem darf der Schwellenwert nicht so hoch gelegt werden, dass eintretende Ereignisse nicht mehr erfasst werden. Dabei hat es sich herausgestellt, dass sich die Amplitude im Falle eines Ereignisses so stark vom Grundrauschen unterscheidet, dass die Schwelle über Durchführung von Tests ohne größere Schwierigkeiten geeignet festlegbar ist, beispielsweise im Bereich eines geringen Vielfachen der Standardabweichung des Grundrauschens, wobei je nach eingesetzter Überwachungstechnik und Überwachungsparameter durchaus auch unterschiedliche Schwellen gewählt werden können.

In einer bevorzugten Ausgestaltung wird die zusätzliche Verzahnungsbearbeitung wenigstens über einen Breitenabschnitt der Verzahnung eine Wiederholung des das Ansprechen der Überwachung auslösenden Bearbeitungsdurchgangs ist. Auf diese Weise kann der eingeschweißte Span zuverlässig entfernt werden. In einem unglücklichen Fall ist es denkbar, dass bei der Durchführung der zusätzlichen Verzahnungsbearbeitung erneut ein Span eingepresst wird, was jedoch ebenfalls aufgrund der Überwachung festgestellt würde und behoben werden könnte.

In einer anderen bevorzugten Ausgestaltung des Verfahrens ist vorgesehen, die zusätzliche Verzahnungsbearbeitung mit einem gegenüber dem das Ansprechen der Überwachung auslösenden Bearbeitungsdurchgang geringerem Abstand zwischen Werkzeug und Verzahnung auszuführen. Beispielsweise wird die Zustellung um einen Wert in der Größenordnung der Schneidkantenverzahnung des Werkzeugs, z.B. im Bereich von 5-40 µm, insbesondere 10-30 µm reduziert gegenüber dem Ereignis auslösenden Bearbeitungsdurchgang. Dies reicht aus, um den eingepressten Span zu erfassen und abzulösen. Insoweit noch ein Eindruck des vormals eingepressten Spans in der Zahnflankengeometrie verbleibt, ist diese für den späteren Einsatz im Getriebe deutlich unschädlicher als ein durch den vormalig eingepressten Span bestehender Materialüberstand über der Zahnflanke.

In einer weiteren bevorzugten Ausgestaltung wird aus der Schwellenwertüberschreitung ein Verzahnungsbreitenbereich ermittelt, dem das Ereignis zuzuordnen ist, und die zusätzliche Verzahnungsbearbeitung erfolgt insbesondere in Abhängigkeit des ermittelten Verzahnungsbereichs. Insbesondere bei größeren Verzahnungsbreiten kann somit Arbeitszeit für die zusätzliche Verzahnungsbearbeitung eingespart werden, wenn nur der betroffene Bereich, oder etwa nur bis zum betroffenen Bereich, oder nur ab dem betroffenen Bereich bei der zusätzlichen Verzahnungsbearbeitung gearbeitet wird, je nachdem ob der betroffene Bereich näher am bearbeitungseinlaufenden oder am bearbeitungsauslaufenden Ende der Verzahnung liegt.

Grundsätzlich ist es nicht ausgeschlossen, dass in dem die Zahnflankenendgeometrie erzeugenden Bearbeitungsdurchgang ein Doppelereignis festgestellt wird, in diesem Fall kann insbesondere zur Vereinfachung vorgesehen werden, die zusätzliche Verzahnungsbearbeitung über die volle Breite der Verzahnung laufen zu lassen.

In einer denkbaren Ausgestaltung können auch zwei Parameter überwacht werden und die Überwachung spricht an, wenn die Amplitude der zeitlichen Verläufe beider Parameter zeitlich korreliert einen jeweiligen vorgegebenen Schwellenwert überschreitet. Dadurch wird eine höhere Redundanz sichergestellt für den Fall, dass eine Überwachung nicht oder aus einem anderen Grund anspricht.

Im überwiegenden Fall wird es sich beim Ansprechen der Überwachung um ein einmaliges auslösendes Ereignis handeln. Eine wiederkehrende Auffälligkeit im überwachten Verlauf des Parameters deutet dagegen auf eine andere Störung hin, die gesondert zu betrachten und zu beseitigen wäre.

Hinsichtlich der Art und Weise, wie die Überwachung durchgeführt wird, sind diverse Möglichkeiten denkbar wie externe Sensoren, etwa Akustiksensoren, bevorzugt werden jedoch Maschinenbetriebsparameter herangezogen, etwa betreffend direkt oder indirekt die Werkstückdrehzahl oder das Drehmoment der Werkstückdrehung, oder auch die Werkzeugdrehzahl oder das Drehmoment der Werkzeugdrehung.

So kann direkt eine Drehzahl überwacht werden, oder Regelabweichungen bei der Drehzahlregelung oder Drehmomentabweichungen herangezogen werden. Dies kann auch indirekt erfolgen, beispielsweise über Strommessungen, die für die Regelung der Drehachsen vorgesehen sind. Auch andere Maschinenachsen können hierfür herangezogen werden.

Das Verfahren eignet sich für die Bearbeitung von Außenverzahnungen wie von Innenverzahnungen, wobei es insbesondere bei Innenverzahnungen besonders effektreich zur Geltung kommt.

Des Weiteren ist das Verfahren insbesondere für das Wälzfräsen und das Wälzschälen (Power-Skiving) gedacht, besonders bevorzugt für das Wälzschälen von Innenverzahnungen. Es kann auch dann herangezogen werden, wenn innerhalb von Verzahnungen weitere Verzahnungen eingearbeitet werden, beispielsweise in Form der Einarbeitung einer Hinterlegung in eine Innenverzahnung und nicht nur bei der Erzeugung der Innenverzahnung selbst. Des Weiteren sind auch das Wälzstoßen und das Schaben Verfahrensgestaltungen der Bearbeitung, an die gedacht wird. Zudem lässt sich das Verfahren auch bei der Erzeugung von Kegelrädern anwenden.

Die Überwachung kann auch während vorangehender Schruppgänge ausgeführt werden, um etwa die Anzahl der erfassten Ereignisse aufzuzeichnen und ggf. in die Entscheidung einfließen zu lassen, wann das Werkzeug nachgeschärft oder ausgetauscht wird.

Das Verfahren wird auch steuerungstechnisch in Form eines zur Steuerung einer Verzahnungsmaschine einsetzbaren Computerprogrammprodukts unter Schutz gestellt, wie auch in Form einer zur Ausführung dieses Verfahrens steuerbaren Verzahnungsmaschine.

Weitere Merkmale, Einzelheiten und Vorteile der Erfindung ergeben sich aus der nachfolgenden Beschreibung mit Bezug auf die beigefügten Figuren, von denen
Fig. 1 schematische, die Erfindung erläuternde Skizzen einer Verzahnung teils in Eingriff mit einem Werkzeug zeigt,
Fig. 2 in schematischer Weise eine Überwachung erläutert,
Fig. 3 eine reale Messung passend zu Fig. 2 zeigt, und
Fig. 4 eine als Wälzschälmaschine gestaltete Verzahnungsmaschine zeigt.

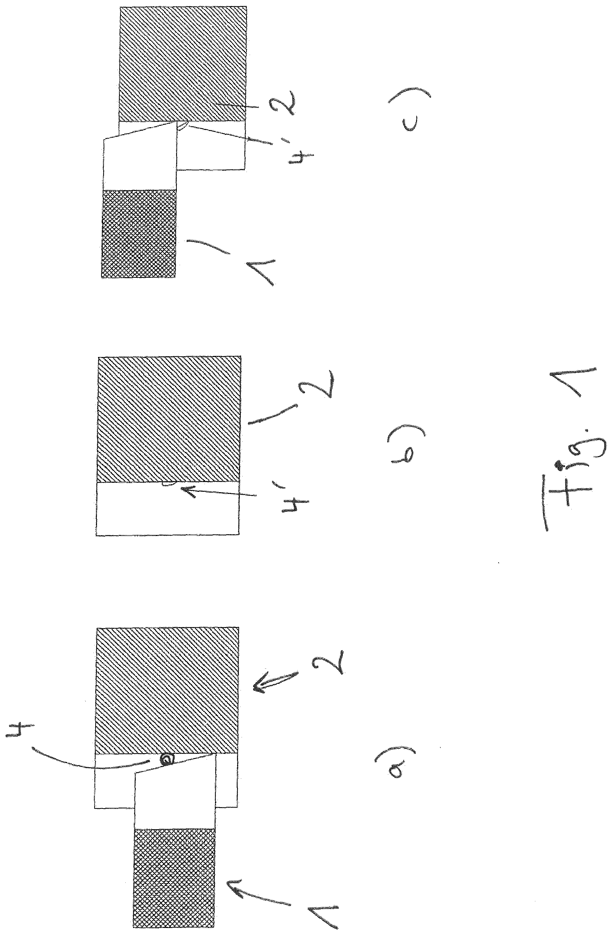

Anhand von Fig. 1 werden die an der bearbeiteten Verzahnung im Rahmen der Erfindung auftretenden Ereignisse nochmals kurz bildhaft erläutert. So ist in Fig. 1a dargestellt, wie bei der Bearbeitung einer Verzahnung 2 in einem letzten Schlichtdurchgang durch ein Verzahnungswerkzeug 1, im dargestellten Fall ein Schälrad, ein Span 4 (in Fig. 1a eingerollt dargestellt) in einen Spalt zwischen Schälrad 1 und Verzahnung 2 gerät und bei der Bearbeitung wälzend in die Verzahnung 2 eingepresst wird. Dieser Zustand ist in Fig. 1b gezeigt, in der der eingepresste Span mit 4' bezeichnet ist. Fig. 1c stellt schematisch die Situation dar, in der der eingepresste Span 4' in einer zusätzlichen Verzahnungsbearbeitung abgenommen wird. Man erkennt aus Fig. 1c, dass die Entfernung des eingepressten Spans 4' mit dem gleichen Schälrad 1 erfolgt, das zuvor den Span 4 in die Verzahnung 2 eingepresst hatte.

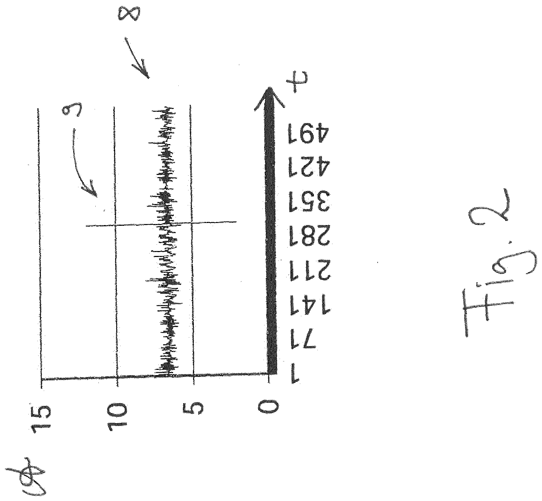

Des Weiteren ist in der in diesem Ausführungsbeispiel zwischen den Fig. 1a, b und 1c dargestellten Situation keine Änderung der Werkstückaufspannung vorgenommen worden. Vielmehr ist das Werkstück mit der Verzahnung 2 in der gleichen Aufspannung gehalten. Die Präsenz des eingepressten Spans 4' wird bereits während des in Fig. 1a dargestellten Bearbeitungsschrittes durch eine Überwachung festgestellt. Ein Beispiel für eine derartige Überwachung ist schematisch in Fig. 2 dargestellt, so wird etwa die Drehzahl oder ein anderer Parameter des die Verzahnung 2 tragenden Werkstücks über die Zeit aufgezeichnet. Diese bewegt sich in der schematisch dargestellten Situation innerhalb eines im Rahmen der Drehzahlregelung erfolgenden Grundrauschens, erfährt jedoch wie in Fig. 2 dargestellt im Moment des Einpressens des Spans 4 einen kurzzeitigen pikartigen Ausschlag (9), auf den die Überwachung anspricht. Die zugrundeliegende Maschinensteuerung erhält ein entsprechendes Signal "Ereignis", und schaltet daraufhin in eine Betriebsart, in der die zusätzliche, in Fig. 1c dargestellte Bearbeitung vorgenommen wird.

Nach dieser zusätzlichen Bearbeitung liegt die gewünschte Zahnflankenendgeometrie an der Verzahnung 2 ohne Materialüberstände durch den eingepressten Span 4' vor, und die Verzahnung sorgt im späteren Einsatz im Getriebe für einen geräuscharmen Lauf und birgt keine erhöhten Risiken eines Getriebeschadens, die andernfalls bestehen würden, wäre der eingepresste Span 4' unentdeckt geblieben und die Verzahnung 2 in diesem Zustand in das Getriebe eingesetzt worden.

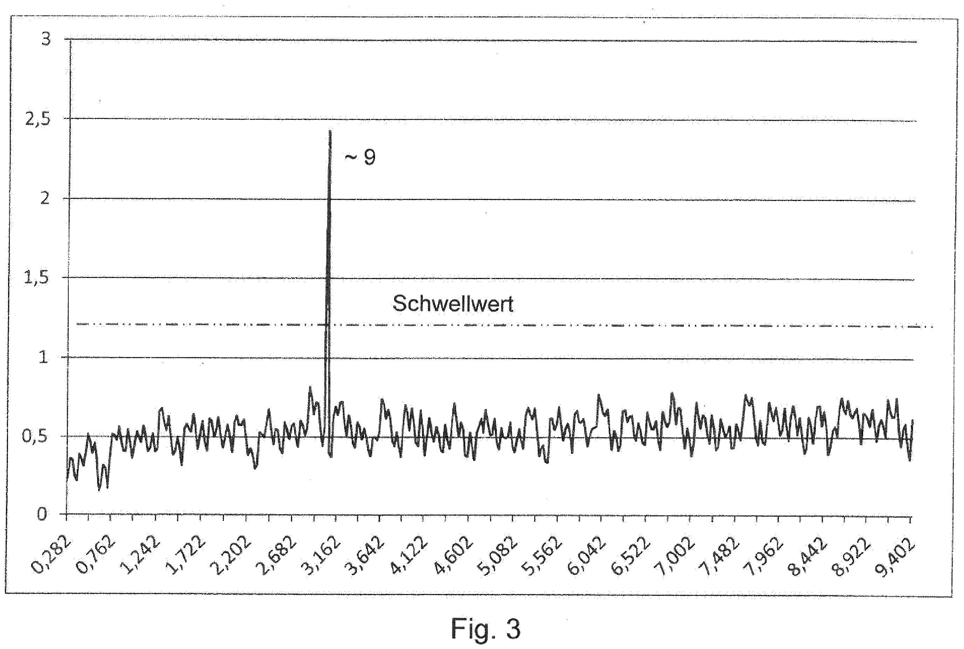

Die in Fig. 2 abstrakt dargestellte Überwachung lässt sich auf vielfältige Weise durchführen, beispielhaft sei auf das in Fig. 3 dargestellte Messdiagramm verwiesen, in dem die entsprechend einer bevorzugten Variante aus dem Regelkreis für die Werkzeugspindel abgeleitete zeitliche Entwicklung des Drehmoments abgebildet ist, denkbar sind jedoch auch andere aus diesem oder dem Regelkreis für die Werkstückspindel abgeleitete Größen, oder andere Messsysteme/Sensoren, etwa die Winkellage von Werkzeugspindel oder Werkstückspindel erfassende Messsysteme, Geschwindigkeitssensoren, Wegmesssysteme oder Körperschallsensoren.

In der in Fig. 1c dargestellten zusätzlichen Bearbeitung wiederholt das Schälrad 1 hinsichtlich der Zustellungstiefe den letzten Schlichtdurchgang zur Erzeugung der Zahnflankenendgeometrie. Dies ist jedoch nicht zwingend erforderlich, ebenso genügt ein Durchlauf mit geringfügig größerem Bearbeitungsabstand, um den eingepressten Span 4' zu erfassen und zu entfernen.

Da das Schälrad 1 gegenüber der Verzahnung 2 axial vorgeschoben wird, um die gesamte Verzahnungsbreite zu bearbeiten, lässt sich aus der in Fig. 2 dargestellten Überwachungssituation auch auf die Zeit und somit die in Fig. 1 gesehen Höhe des Ortes bestimmen, an dem der Span 4 eingepresst wurde, wenigstens approximativ. Die zusätzliche Verzahnungsbearbeitung muss somit nicht über die volle Breite der Verzahnung ausgeführt werden, wodurch Zeit gespart werden kann.

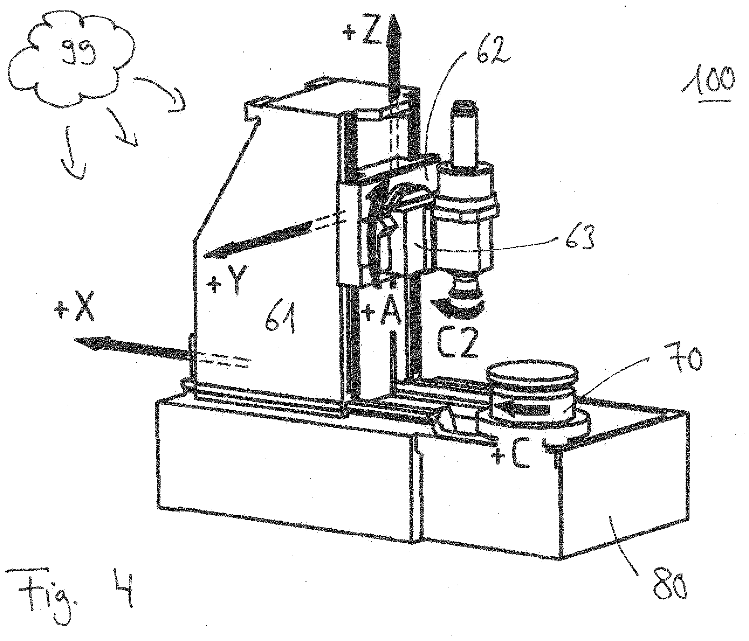

Fig. 4 zeigt noch eine Wälzschälmaschine 100 mit einer Steuerung 99, in welcher beispielsweise über die oben genannten Varianten eine Überwachung auf das Ereignis implementiert ist. Es handelt sich um eine CNC-gesteuerte Maschine mit jeweils Einzelantrieben für die dargestellten Bewegungsachsen X, Y, Z, A, C, C2. So weist die Wälzschälmaschine 100 werkstückseitig eine auf einem Maschinenbett 80 angeordnete Werkstückspindel 70 auf, die hier als stehende Spindel gestaltet ist. Werkzeugseitig ist eine in radialer Zustellrichtung X gegenüber dem Maschinenbett 80 beweglicher Radialschlitten 61 vorgesehen, dem ein diesem gegenüber in Axialrichtung Z beweglich gelagerter Axialschlitten 62 schwenkbar den Tangentialschlitten 63 trägt, in welchem der Werkzeugkopf mit Werkzeugspindelachse C2 angeordnet ist. Die Schwenkachse A ist parallel zur Radialachse X und erlaubt ein Verschwenken der Werkzeugspindelachse C2 in der Y-Z-Ebene, zur Einstellung des Achskreuzwinkels Σ zwischen Werkzeugdrehachse und Werkstückdrehachse für die typische Maschinenachskonfiguration des Wälzschälens.

Obgleich die Erfindung bevorzugt für das Wälzschälen von Innenverzahnungen eingesetzt wird, ist sie jedoch nicht auf Innenverzahnungen beschränkt und auch nicht auf das Wälzschälverfahren. So ist insbesondere daran gedacht, auch Wälzfräsmaschinen, Wälzstoßmaschinen, Schabmaschinen mit Schabwerkzeugen oder Verzahnmaschinen zur Erzeugung von Kegelrädern durch ihre jeweiligen Steuerungen nach einem der oben erläuterten Aspekte zu steuern. Die Verzahnungsmaschinen haben somit wenigstens zwei Betriebsarten, wobei in einer Betriebsart gegenüber der anderen Betriebsart eine zusätzliche Bearbeitung stattfindet, wenn die Überwachung der Steuerung der Maschine auf das potentielle Ereignis der Einpressens eines Spans in die Verzahnung anspricht.

Auch im Übrigen ist die Erfindung nicht auf die in der Figurenbeschreibung dargestellten Einzelheiten eingeschränkt.

## Patentansprüche

1. Verfahren zur Bearbeitung einer Verzahnung (2) eines an einem in einer Aufspannung gehaltenen Werkstücks, bei dem ein um seine Drehachse rotierendes, Schneidkanten (5) aufweisendes Verzahnungswerkzeug (1) mit der insbesondere um ihre Drehachse rotierenden Verzahnung in insbesondere wälzenden spanabtragenden Bearbeitungseingriff gebracht wird, um in einem oder mehreren Bearbeitungsdurchgängen eine vorgegebene Zahnftankenendgeometrie zu erzeugen,
**dadurch gekennzeichnet, dass** während des die Zahnflankenendgeometrie erzeugenden Bearbeitungsdurchgangs eine auf das Ereignis eines durch die insbesondere wälzende Bearbeitung bewirkten Einpressens eines abgetragenen Spans (4) in eine bearbeitete Zahnflanke der Verzahnung (2) ansprechende Überwachung durchgeführt wird und bei Ansprechen der Überwachung insbesondere automatisch eine einen bei eingetretenem Ereignis durch den eingepressten Span (4') gebildeten Materialüberstand über der Zahnflankenendgeometrie beseitigende zusätzliche Verzahnungsbearbeitung ausgeführt wird, die insbesondere in derselben Aufspannung des Werkstücks und insbesondere durch das Verzahnungswerkzeug (1) selbst erfolgt.

2. Verfahren nach Anspruch 1, bei dem die Überwachung anspricht, wenn die Amplitude (A) des zeitlichen Verlaufs (8) eines von ihr überwachten Parameters einen vorgegebenen Schwellenwert überschreitet.

3. Verfahren nach Anspruch 1 oder 2, bei dem die zusätzliche Verzahnungsbearbeitung wenigstens über einen Breitenabschnitt der Verzahnung eine Wiederholung des das Ansprechen der Überwachung auslösenden Bearbeitungsdurchgangs ist.

4. Verfahren nach Anspruch 1 oder 2, bei dem bei der zusätzlichen Verzahnungsbearbeitung mit einem gegenüber dem das Ansprechen der Überwachung auslösenden Bearbeitungsdurchgangs geringeren Abstand zwischen Werkzeug und Verzahnung ausgeführt wird.

5. Verfahren nach einem der Ansprüche 3 bis 4, bei dem aus der Schwellenwertüberschreitung ein Verzahnungsbreitenbereich ermittelt wird, dem das Ereignis zuzuordnen ist, und die zusätzliche Verzahnungsbearbeitung insbesondere in Abhängigkeit des ermittelten Verzahnungsbereichs erfolgt.

6. Verfahren nach einem der vorhergehenden Ansprüche, bei dem zwei Parameter überwacht werden und die Überwachung anspricht, wenn die Amplituden der zeitlichen Verläufe beider Parameter einen jeweilig vorgegebenen Schwellenwert überschreiten.

7. Verfahren nach einem der Ansprüche 2 bis 6, bei dem ein überwachter Parameter die Werkstückdrehung abbildet und insbesondere die Werkstückdrehzahl oder das Drehmoment der Werkstückdrehung direkt oder indirekt abbildet.

8. Verfahren nach einem der Ansprüche 2 bis 7, bei dem ein überwachter Parameter die Werkzeugdrehung abbildet, insbesondere die Werkzeugdrehzahl oder das Drehmoment der Werkzeugdrehung direkt oder indirekt abbildet.

9. Computerprogrammprodukt mit einem Steuerprogramm, **dadurch gekennzeichnet, dass** das Computerprogrammprodukt wenn auf einer Steuereinrichtung (99) einer Verzahnungsmaschine (100) ausgeführt, diese zur Durchführung eines Verfahrens nach einem der Ansprüche 1 bis 8 steuert.

10. Verzahnungsmaschine (100) mit einer Werkstückspindel zum drehenden Antreiben eines in einer mit der Werkstückspindel verbundenen Aufspannung gehaltenen Werkstücks, einer Werkzeugspindel zum drehenden Antrieb eines Verzahnungswerkzeugs, sowie einer Steuereinrichtung (99), **dadurch gekennzeichnet, dass** die Steuereinrichtung die Verzahnungsmaschine zur Durchführung eines Verfahrens nach einem der Ansprüche 1 bis 8 steuern kann.

## Claims

1. A method for machining a toothing (2) of a workpiece held in a clamping, wherein a toothing tool (1) that rotates around its rotational axis and comprises cutting edges (5) is brought into in particular rolling chip-removing machining engagement with the toothing that rotates in particular around its axis of rotation, in order to produce a predetermined tooth flank end geometry in one or more machining passes,
**characterised in that** during the machining pass which produces the tooth flank end geometry, monitoring responsive to the event of a removed chip (4) being pressed into a machined tooth flank of the toothing (2) as a result of the machining, in particular rolling machining, is carried out and, if the monitoring responds, an additional toothing machining process is implemented, in particular automatically, which process removes the material protrusion, formed by the chip (4') that was pressed in during the occurrence of the event, on the tooth flank end geometry, and which process is carried out in particular in the same clamping of the workpiece and in particular by means of the toothing tool (1) itself.

2. The method in accordance with claim 1, wherein the monitoring responds when the amplitude (A) of the time profile (8) of a parameter monitored by said monitoring exceeds a predetermined threshold value.

3. The method in accordance with claim 1 or 2, wherein the additional toothing machining process is a repetition, at least over a width portion of the toothing, of the machining pass that triggered the response of the monitoring.

4. The method in accordance with claim 1 or 2, wherein the additional toothing machining process is carried out using a smaller distance between the tool and toothing compared with the machining pass which triggered the response of the monitoring.

5. The method in accordance with claims 3 and 4, wherein a toothing width range to which the event is to be attributed is determined from the exceedance of the threshold value, and the additional toothing machining process is carried out in particular on the basis of the determined toothing range.

6. The method in accordance with one of the preceding claims, wherein two parameters are monitored and the monitoring responds if the amplitudes of the time profiles of both parameters exceed a respective predetermined threshold value.

7. The method in accordance with one of claims 2 to 6, wherein a monitored parameter maps the workpiece rotation and in particular directly or indirectly maps the rotational speed of the workpiece or the torque of the workpiece rotation.

8. The method in accordance with one of claims 2 to 7, wherein a monitored parameter maps the tool rotation, and in particular directly or indirectly maps the rotational speed of the tool or the torque of the tool rotation.

9. A computer program product comprising a control program, **characterised in that** the computer program product, when executed on a controller (99) of a toothing machine (100), controls the latter so as to carry out a method in accordance with claims 1 to 8.

10. A toothing machine (100) comprising a workpiece spindle for rotationally driving a workpiece held in a clamping connected to the workpiece spindle, a tool spindle for rotationally driving a toothing tool, and a controller (99), **characterised in that** the controller can control the toothing machine so as to carry out a method in accordance with one of claims 1 to 8.

## Revendications

1. Procédé d'usinage d'une denture (2) d'une pièce à usiner retenue dans un serrage, dans lequel un outil à tailler les dentures (1) tournant sur son axe de rotation et présentant des arêtes de coupe (5) est amené en contact d'usinage par enlèvement de matière, notamment un usinage par génération, avec ladite denture, tournant notamment sur son axe de rotation, afin de produire une géométrie d'extrémité de flanc de dent prédéterminée, en une ou plusieurs passes d'usinage,
**caractérisé en ce que**, pendant la passe d'usinage visant à produire la géométrie d'extrémité de flanc, il s'effectue une surveillance réagissant à un événement consistant en la compression d'un copeau (4), enlevé, dans un flanc de dent en cours d'usinage de la denture (2) du fait de l'usinage notamment par génération, et en cas de réaction de la surveillance, il se produit notamment automatiquement un usinage de denture supplémentaire visant à éliminer, sur la géométrie d'extrémité de flanc, l'excédent de matériau constitué lors de cet événement du fait du copeau compressé (4'), lequel usinage supplémentaire a notamment lieu dans le même serrage de la pièce à usiner et notamment à l'aide dudit outil à tailler les dentures (1) lui-même.

2. Procédé selon la revendication 1, dans lequel la surveillance réagit lorsque l'amplitude (A) de l'évolution dans le temps (8) d'un paramètre qui y est surveillé dépasse une valeur seuil prédéfinie.

3. Procédé selon la revendication 1 ou 2, dans lequel l'usinage de denture supplémentaire consiste, au moins sur une section en largeur de la denture, en une répétition de la passe d'usinage ayant déclenché ladite réaction de la surveillance.

4. Procédé selon la revendication 1 ou 2, dans lequel l'usinage de denture supplémentaire se produit avec un moindre écart entre l'outil et la denture comparativement à la passe d'usinage ayant déclenché ladite réaction de la surveillance.

5. Procédé selon l'une des revendications 3 et 4, dans lequel le dépassement de la valeur seuil permet d'établir une plage de largeur de denture à laquelle peut être imputé l'événement, et l'usinage de denture supplémentaire a notamment lieu en fonction de la plage de denture établie.

6. Procédé selon l'une quelconque des revendications précédentes, dans lequel la surveillance concerne deux paramètres et réagit lorsque l'amplitude de l'évolution temporelle de ces deux paramètres dépasse une valeur seuil prédéfinie propre à chacun.

7. Procédé selon l'une des revendications 2 à 6, dans lequel un paramètre surveillé représente la rotation de la pièce à usiner et représente notamment, directement ou indirectement, la vitesse de rotation de la pièce à usiner ou le couple de la rotation de la pièce à usiner.

8. Procédé selon l'une des revendications 2 à 7, dans lequel un paramètre surveillé représente la rotation de l'outil et représente notamment, directement ou indirectement, la vitesse de rotation de l'outil ou le couple de la rotation de l'outil.

9. Produit-programme d'ordinateur comportant un programme de commande, **caractérisé en ce que** ledit produit-programme d'ordinateur, lorsqu'il est exécuté par un dispositif de commande (99) d'une machine à tailler les dentures (100), commande cette dernière de façon à mettre en œuvre un procédé selon l'une des revendications 1 à 8.

10. Machine à tailler les dentures (100) comprenant une broche porte-pièce visant à entraîner en rotation une pièce d'usinage retenue dans un serrage raccordé à ladite broche porte-pièce, une broche porte-outil visant à entraîner en rotation un outil à tailler les dentures, ainsi qu'un dispositif de commande (99), **caractérisée en ce que** le dispositif de commande est apte à commander la machine à tailler les dentures afin de mettre en œuvre un procédé selon l'une des revendications 1 à 8.
